Europäisches Patentamt

European Patent Office

Office européen des brevets

(11) Veröffentlichungsnummer: **0 448 784 A2**

(12) **EUROPÄISCHE PATENTANMELDUNG**

(21) Anmeldenummer: 90122289.3

(22) Anmeldetag: 22.11.90

(51) Int. Cl.5: **C09D 125/12**, C09D 113/00, C08J 7/04, C08J 9/36

(30) Priorität: 27.03.90 DE 4009775

(43) Veröffentlichungstag der Anmeldung: 02.10.91 Patentblatt 91/40

(84) Benannte Vertragsstaaten: AT BE DK FR GB IT NL SE

(71) Anmelder: **Firma Carl Freudenberg**
**Höhnerweg 2-4**
**W-6940 Weinheim/Bergstrasse(DE)**

(72) Erfinder: **Hausdorf, Jörg**
**Bahnstrasse 6**
**W-6942 Mörlenbach(DE)**
Erfinder: **Siekermann, Volker, Dr.**
**Erich-Kästner-Strasse 1**
**W-6149 Fürth(DE)**
Erfinder: **Kosack, Steffen, Dr.**
**Neustadter Strasse 75**
**W-6733 Hassloch(DE)**
Erfinder: **Stief, Reinhard**
**Tannenstrasse 8**
**W-8940 Weinheim(DE)**

(54) Beschichtungs- und Imprägniersystem für offenstrukturierte, thermoverformbare Flächengebilde.

(57) Die Verwendung des chemischen Vernetzungsprodukts aus

a) der 50%igen, wäßrigen Dispersion eines thermisch vernetzbaren Copolymerisats mit einer Glasübergangstemperatur von +33°C aus Acrylnitril und Styrol
und aus

b) der 50%igen, wäßrigen, kolloidalen Dispersion eines Mischpolymerisats mit einer Glasübergangstemperatur von -30°C
aus 2-Chlorbutadien und Acrylsäure oder
aus Butadien, Acrylnitril und Methacrylsäure

als Beschichtungssystem für offenstrukturierte, nach der Beschichtung thermoverformbare Flächengebilde führt zu lagerfähigen, Rohlingen, die durch Preßformen zu in den Verdichtungszonen steifelastischen, wärmestandfesten Formteilen verarbeitet werden können.

EP 0 448 784 A2

Die Erfindung betrifft die Verwendung eines thermisch verformbaren, polymeren, als chemisches Vernetzungsprodukt zweier wäßriger Dispersionen vorliegenden Systems als Beschichtungssystem für offenstrukturierte, nach der Beschichtung thermoverformbare Flächengebilde.

Unter dem Begriff "offenstrukturiert" ist dabei ein Flächengebilde zu verstehen, das nach der Beschichtung bzw. Verformung im Innern Hohlräume unterschiedlicher Struktur enthält, die miteinander verbunden sind.

Das Problem besteht darin, daß offenstruktierte Flächengebilde in definierten Zonen wärmestabil verformbar und verdichtbar gemacht werden müssen, und zwar so, daß elastisch feste, thermostabile, aber nicht spröde Bereiche im Formteil dort entstehen, wo die Form pressend angreift. Um eine Verformung von offenstrukturierten Flächengebilden zu erreichen, wurden bisher Beschichtungen auf der Basis Waserglas, Polyethylen, Ethylenvinylacetat, Polyvinylchlorid, Polyacrylat, Phenolharz oder Polyimid verwendet. Diese Beschichtungen werden auf die Flächengebilde vollständig oder auch nur zonenweise vor der Verformung aufgetragen.

Werkstoffbeispiele für solche Flächengebilde und deren Anwendung als fertige Formlinge sind Vliesstoffe als Funktionsformteile für Schallschutzanordnungen, für Filter oder Leichtbauformteile oder Polyurethanschäume für Schallschutz- und Filter-Formteile.

Alle bisher bekannten Beschichtungsmaterialien lassen sich nur mit großen Sicherheitsvorkehrungen oder erheblichem Produktionsaufwand verarbeiten. Die Sicherheit spielt eine Rolle bei der Verwendung von den meist notwendigen organischen Lösungsmittel; der Produktionsaufwand ist hoch bei der Verwendung von Pulverharzen aufgrund von Problemen bezüglich der Filmbildung und der Agglomeratbildung. Ein weiterer gravierender Nachteil besteht darin, daß einige Beschichtungsmaterialen die notwendigen Wärmestandfestigkeiten von 140°C nicht erreichen oder die beim Formpressen bzw. Tiefziehen erforderlichen hohen Dehnungseigenschaften nicht aufweisen.

Die Aufgabe der vorliegenden Erfindung besteht darin, ein Beschichtungssystem für offenstrukturierte, nach der Beschichtung thermoverformbare Flächengebilde anzugeben, welches ohne Lösungsmittel auskommt, bei mindestens 140°C noch absolut wärmestandfest ist, um die bis zu 180°C betragenden Werkzeugtemperaturen auszuhalten, und welches die Verformungsbedingungen auch aufgrund seiner Dehnbarkeit mechanisch schadlos übersteht. Ferner soll das Beschichtungssystem nach dem Auftragen auf das Flächengebilde bis zu dessen Verformung mehrere Wochen lang lagerfähig bleiben.

Diese Aufgabe wird gelöst durch die Verwendung des in Anspruch 1 gekennzeichneten Vernetzungsprodukts. Bevorzugte Varianten des Verfahrens sind in den Unteransprüchen aufgezeigt.

Das Verhältnis der 50%igen wäßrigen Dispersion des Copolymerisats zu der wäßrigen, kolloidalen Dispersion des Mischpolymerisats sollte sich zwischen 70:30 und 30:70 bewegen, um ein definiertes chemisches Vernetzungsprodukt zu erhalten. Das Verhältnis kann variiert werden je nach dem gewünschten Grad der Thermoverformbarkeit, der Elastitzität und der Steifigkeit des beschichteten Flächengebildes: Ein höherer Anteil an vernetzbarem Copolymerisat führt zu harten, aber nicht spröden Formteilen, während die Erhöhung der kolloida len Dispersion des Mischpolymerisats zu weichen, hochdehnbaren Formteilen führt.

Eine vollständige Beschichtung des Flächengebildes vor der Verformung wird man nur dann durchführen, wenn Formteile gewünscht werden, die nach der Beschichtung gering offenstrukturiert sind. Dies ist der Fall bei z.B. Öl oder Wasser ausgesetzten Bauteilen, wie Schallabdichtungen im Motorraum.

Die nur zonenweise Beschichtung erfolgt zweckmäßig dann, wenn sehr offenstrukturierte Bauteile herzustellen sind, z.B. Schallabsorber, Filter oder Flüssigkeitsabsorber.

Die Auftragsmenge des Beschichtungssystems beträgt 10 bis 200 g/m², auf das Trockengewicht bezogen.

Für die wäßrige Dispersion b) mit einer Glasübergangstemperatur von -30°C sind Mischpolymerisate aus 2-Chlorbutadien und Acrylsäure und alternativ aus Butadien, Acrylnitril und Methacrylsäure gleichermaßen gut geeignet.

Die anspruchsgemäßen Dispersionen sind im Handel erhältlich; die Komponente a) z.B. unter der Bezeichnung Acronal S 886 S der Firma BASF, die Komponente b) mit 2-Chlorbutadien unter der Bezeichnung Bayer Latex 4 R der Firma Bayer, mit Butadien unter dem Handelsnamen Perbunan N-Latex 3415 M der Firma Bayer.

Ihre Eignung als getrennt voneinander einzusetzende Mittel für Beschichtungs-, Kaschier- und Klebezwecke sowie ihre typbedingte Alterungs- oder Benzin- und Mineralölbeständigkeit sind bekannt. Unvorhersehbar war jedoch, daß die kombinierte Verwendung dieser Dispersionen auf unter Hitzeeinwirkung zu verformenden, vor der Beschichtung offenstrukturierten Flächengebilden nach der Trocknung zu Beschichtungen führen würde, die wegen ihrer hohen Dehnbarkeit die Fomvorgänge zerstörungsfrei überstehen und Wärmestandfestigkeiten von mindestens 140°C aufweisen.

Bei der thermischen Verformung der Flächengebilde bilden die darauf befindlichen Beschichtungssysteme Verdichtungszonen (Angriffsflächen der Form), welche weichelastisch und keinesfalls spröde, jedoch noch ausreichend steif sind.

Das erfindungsmäße Beschichtungssystem ist wäßriger Natur; es entfallen somit Schutz- und Entsorgungsmaßnahmen, wie sie bisher beim Einsatz von Lösungsmitteln erforderlich waren. Die Auftragsmenge (trocken) kann von 10 bis 200 g/m² Fläche des offenstrukturierten, thermoplastischen Flächengebildes betragen. Weitere Vorteile sind Trocknungszeiten von bei Raumtemperatur durchschnittlich nur 5 Minuten und die Tatsache, daß beschichtete und getrocknete Flächenware vor der Verarbeitung wochenlang lagerfähig ist, ohne daß das Beschichtungssystem seine vorteilhaften Qualitäten und Wirkungen einbüßt.

Es war ferner nicht vorhersehbar, daß durch Zusammenwirken der Copolymerisat-Dispersion (Wärmestandfestigkeit um 100° C) mit der Dispersion b) (Wärmestandfestigkeiten um 150° C) ein chemisches Vernetzungsprodukt entsteht, welches eine völlig andere Wärmestandfestigkeit hat, nämlich deutlich über 150° c. Dieser Effekt ist deshalb vorteilhaft, weil ohne Verwendung zusätzlicher Vernetzer eine hohe Temperaturbeständigkeit des Produktes erzielt werden kann.

Eine Variante der Erfindung besteht in der Beigabe eines Melaminformaldehyd-Vorkondensats in einer Menge von 1 bis 15 Gew.%, bezogen auf das Beschichtungssystem. Dadurch wird dessen Vernetzung während des Preßformens erhöht und somit die Wärmestandfähigkeit nochmals verbessert. Insbesondere mit einer Zugabe von 10 % sind die Verdichtungszonen nach dem Verformen des Flächengebildes hart, aber nicht spröde.

Dem erfindungsgemäßen Beschichtungssystem können Flammschutzmittel zugesetzt werden, zweckmäßig eine Mischung aus rotem Phosphor und Ammoniumpolyphosphat im Verhältnis 1:15 und in einer Menge von 5 bis 15 %.

Die folgenden Beispiele zeigen, wie die Einzelkomponenten des Beschichtungssystems für sich allein nicht die Preßformung überstehen oder zu übermäßig weichen Verdichtungszonen beitragen und wie ihre erfindungsgemäße Kombination diese Probleme löst.

Die eingangs charakterisierten Komponenten werden jeweils als 50%ige wäßrige Dispersion in einem schnellaufenden Rührwerk vermischt und mit einem bekannten, handelsüblichen Verdickungsmittel, z.B. Latecoll D der Firma BASF, auf die jeweils gewünschte Viskosität eingestellt. Die Beschichtung kann gleich gut durch eine Spritzpistole, durch Bürsten, Rakeln oder Drucken aufgetragen werden; in den Beispielen in einer Menge von 100 g/m² und nur auf die zu verformenden bzw. zu verdichtenden Bereiche des offenstrukturierten Flächengebildes, eines Polyester-Faservliesstoffs. Die Trocknung erfolgt bei 80° C. Es werden Zuschnitte hergestellt und bei 150° C Werkzeugtemperatur tiefgezogen.

Die Wärmestandfestigkeit wurde gemessen nach folgender Methode: Durchbiegung des Fertigteils kleiner als 5 mm bei 95° C, 120° C, 130° C, 140° C.

| Bestandteile/Produkt | Gewichtsteile in Beispiel | | | | | |
|---|---|---|---|---|---|---|
| | 1 | 2 | 3 | 4 | 5 | 6 |
| Copolymerisat aus Acrylnitril und Styrol, 50%ige, wäßrige Dispersion (Komponente a); Glasübergangstemperatur: +33°C | 100 | – | 50 | 50 | 50 | 50 |
| Polymerisat von 2-Chlorbutadien, 50%ige wäßrige Dispersion | – | 100 | 50 | – | – | – |
| Mischpolymerisat aus 2-Chlorbutadien und Acrylsäure (Komponente b); 50%ige, wäßrige Dispersion; Glasübergangstemperatur: -30°C | – | – | – | 50 | – | – |
| Mischpolymerisat aus Butadien, Acrylnitril, Methacrylsäure (Komponente b); 50%ige wäßrige Dispersion; Glasübergangstemperatur: -30°C | – | – | – | – | 50 | 50 |
| Melaminformaldehyd-Vorkondensat (Handelsproduktt Cassurit F der Firma Hoechst AG) | – | – | – | – | – | 10 |
| Zinkoxid | – | 8 | – | – | – | – |
| Schwefelspender/Vulkanisationsbeschleuniger (Handelsprodukt Vulcacit NPV/C) | – | 2,5 | – | – | – | – |

4

| Bestandteile/Produkt | Gewichtsteile in Beispiel | | | | | |
|---|---|---|---|---|---|---|
| | 1 | 2 | 3 | 4 | 5 | 6 |
| Flammschutzmittel (Ammoniumpolyphosphat/roter Phosphor, 1:10) | 10 | 10 | 10 | 10 | 10 | 10 |
| Verdickungsmittel (Handelsprodukt Latecoll D, Firma BASF | 5,0 | 5,0 | 5,0 | 5,0 | 5,0 | 5,0 |
| Entschäumer (Handelsprodukt DNE der Firma Bayer) | 0,25 | 0,25 | 0,25 | 0,25 | 0,25 | 0,25 |
| Wärmestandfestigkeit des Formteils (°C) | 140 | 100 | 140 | 140 | 140 | 140 |
| Preßverformung | nicht möglich | sehr gut | sehr gut | sehr gut | sehr gut | sehr gut |
| Elastizität der Verdichtungszonen | spröde | sehr weich | weich | weich | weich | hart |

## Patentansprüche

1. Verwendung des chemischen Vernetzungsprodukts aus
   a) der 50%igen, wäßrigen Dispersion eines thermisch vernetzbaren Copolymerisats mit einer Glasübergangstemperatur von +33°C aus Acrylnitril und Styrol
   und aus
   b) der 50%igen, wäßrigen, kolloidalen Dispersion eines Mischpolymerisats mit einer Glasübergangstemperatur von -30°C
   aus
   2-Chlorbutadien und Acrylsäure oder
   aus Butadien, Acrylnitril und Methacrylsäure
   als Beschichtungs- und Imprägniersystem für offenstrukturierte, thermoverformbare Flächengebilde in einer Auftragsmenge (trocken) von 10 bis 200 g/m², wobei das Verhältnis a):b) von 70:30 bis 30:70 beträgt.

2. Verwendung des Vernetzungsprodukts nach Anspruch 1, wobei man zur zusätzlichen Vernetzung ein Melaminformaldehyd-Vorkondensat in einer Menge von 1 bis 15 %, bezogen auf die Summe der Komponenten a) und b), zufügt.

3. Verwendung des Vernetzungsprodukts nach Anspruch 1 oder 2, wobei man als Flammschutz eine Mischung von rotem Phosphor und Ammoniumpolyphosphat im Verhältnis von 1:5 bis 1:15 und in einer

5

Menge von 5 bis 15 % zusetzt.